# EUROPÄISCHE PATENTSCHRIFT

(11) **EP 3 491 238 B1**
(45) Veröffentlichungstag und Bekanntmachung des Hinweises auf die Patenterteilung: **07.06.2023**
(21) Anmeldenummer: 17745725.6
(22) Anmeldetag: 31.07.2017
(51) Int. Cl.: F03D 7/02

(54) **MASCHINENHAUS FÜR EINE WINDENERGIEANLAGE SOWIE VERFAHREN**
NACELLE AND ROTOR FOR A WIND TURBINE, AND METHOD
BÂTI MACHINE ET ROTOR POUR ÉOLIENNE ET PROCÉDÉ CORRESPONDANT

(30) Priorität: 01.08.2016 DE 102016114184
(43) Veröffentlichungstag der Anmeldung: 05.06.2019
(73) Patentinhaber: Wobben Properties GmbH, 26607 Aurich (DE)
(72) Erfinder: MTAUWEG, Samer, 27568 Bremerhaven (DE)
(74) Vertreter: Eisenführ Speiser
(86) Internationale Anmeldenummer: PCT/EP2017/069269
(87) Internationale Veröffentlichungsnummer: WO 2018/024652

(56) Entgegenhaltungen:
- EP-A1- 1 105 645
- WO-A1-2009/071228
- DE-A1-102013 006 281
- US-A1- 2011 031 829
- US-A1- 2011 254 272

## Beschreibung

Die Erfindung betrifft ein Maschinenhaus für eine Windenergieanlage, eine Windenergieanlage sowie eine Verwendung eines planetengetriebefreien elektrischen Stellantriebs, und ein Verfahren zur Windrichtungsnachführung eines Maschinenhauses. Beschrieben werden ferner ein Rotor für eine Windenergieanlage und ein Verfahren zur Rotorblattverstellung von Rotorblättern eines Rotors.

Eine Windenergieanlage wandelt die Energie des Windes in elektrische Energie um. Die dominierende Bauform von Windenergieanlagen ist die dreiblättrige Windenergieanlage mit horizontaler Rotorwelle und Rotor auf der Luvseite im Betrieb, deren Maschinenhaus auf einem Turm angeordnet ist und der Windrichtung aktiv nachgeführt wird. Diese aktive Nachführung des Maschinenhauses in Abhängigkeit der Windrichtung wird in der Regel durch einen Azimutantrieb realisiert. Darüber hinaus können die Rotorblätter einer Windenergieanlage vorzugsweise um ihre Längsachse gedreht werden, indem diese drehbar gelagert sind und durch einen sogenannten Pitchantrieb gedreht werden können. Durch diese Drehung kann der Anstellwinkel der Rotorblätter gegenüber einer aktuell vorherrschenden Windrichtung verändert werden und somit der Abtrieb der Rotorblätter aktiv gesteuert werden. Mit dem Anstellwinkel kann die Drehzahl einer Windenergieanlage maßgeblich beeinflusst werden.

Um die Leistungsfähigkeit und die Kosten von Windenergieanlagen zu verbessern, ist der Trend zu erkennen, dass die Anlagen zunehmend größere Bauformen und/oder höhere Nennleistungen aufweisen. Die größere Bauform bezieht sich insbesondere auf den Rotordurchmesser und/oder auf die Nabenhöhe von Windenergieanlagen. Aufgrund der größeren Abmessungen, insbesondere des Rotors, treten in der Regel größere Kräfte als bei kleineren Bauformen auf. Diese größeren Kräfte wirken beispielsweise auf den Triebstrang der Windenergieanlage. Durch den höher belasteten Triebstrang werden die Komponenten des Triebstrangs im Allgemeinen größer und/oder fester ausgeführt. Daraus folgt im Allgemeinen, dass ein Großteil der Triebstrangkomponenten einer Windenergieanlage ein sehr hohes Gewicht und/oder einen großen Platzbedarf aufweist. Daraus folgen eine entsprechend große Dimensionierung beispielsweise der Gondel und/oder des Maschinenhauses und somit auch eine Beaufschlagung der tragenden Komponenten der Windenergieanlage mit großen Gewichtskräften.

Neben diesen großen statischen Kräften ist festzustellen, dass die auf eine Windenergieanlage und/oder die einzelnen Komponenten einer Windenergieanlage wirkenden dynamischen Kräfte ebenfalls zunehmen können, insbesondere mit einer größeren Bauformen und/oder höheren Nennleistung der Windenergieanlage. Durch die zunehmenden statischen und dynamischen Kräfte werden viele Komponenten der Windenergieanlage zunehmend größer bemessen, um die Funktionalität und Sicherheit zu gewährleisten. Dadurch entstehen einerseits höhere Kosten, aber auch das Risiko von nicht einschätzbaren Schädigungen steigt. Darüber hinaus sind die Montage und die Wartung derart großer Komponenten von Windenergieanlagen mit einem deutlich größeren Aufwand verbunden, als es bei kleineren Windenergieanlagen der Fall ist. Daher können die Kosten bei großen Windenergieanlagen überproportional steigen. Die existierenden Vorrichtungen und Verfahren zum Betrieb solcher Vorrichtungen bieten zwar verschiedene Vorteile, jedoch sind weitere Verbesserungen wünschenswert.

Das Deutsche Patent- und Markenamt hat in der Prioritätsanmeldung zu vorliegender Anmeldung folgenden Stand der Technik recherchiert: DE 199 20 504 C2, DE 10 2008 013 864 B4, DE 10 2013 206 878 A1, DE 10 2013 207 322 A1, DE 20 2007 009 660 U1, DE 20 2008 010 748 U1, EP 1 650 431 B1, EP 2 915 999 A1. Die DE 10 2013 006 281 A1 offenbart eine Vorrichtung um, über wenigstens ein angekoppeltes oder ankoppelbares Ritzel/Zahnrad oder über wenigstens eine Zahnradgetriebestufe, das Antreiben oder Drehverstellen mindestens eines verzahnten Lagerringes zu realisieren, beispielsweise an/in einer Windkraftanlage. Die Vorrichtung beherbergt wenigstens eine Wälzkörperreihe, welche zwischen zwei oder mehr als zwei gegeneinander verdrehbaren und zueinander konzentrisch angeordneten Gehäuseteilen derselben Vorrichtung angeordnet ist.

Es ist daher eine Aufgabe der vorliegenden Erfindung, eine Lösung bereitzustellen, welche einen oder mehrere der genannten Nachteile vermindert oder beseitigt. Insbesondere ist es eine Aufgabe der Erfindung, eine Lösung bereitzustellen, die eine gewichts- und/oder raumoptimierte Bauform einer Windenergieanlage bereitstellt. Darüber hinaus ist es eine Aufgabe der Erfindung, eine Lösung bereitzustellen, die eine verbesserte Montage und/oder Wartung der Windenergieanlage ermöglicht. Des Weiteren ist es eine Aufgabe der Erfindung, eine Lösung bereitzustellen, die eine kostengünstigere Bereitstellung von Windenergieanlagen ermöglicht.

Gemäß einem ersten Aspekt der Erfindung wird die Aufgabe gelöst durch ein Maschinenhaus für eine Windenergieanlage, insbesondere eine Windenergieanlage mit einer Nennleistung von mehr als 3000 kW, mit mindestens einem zur Windrichtungsnachführung des Maschinenhauses eingesetzten Azimutantriebs, der als planetengetriebefreier elektrischer Stellantrieb ausgebildet ist, gemäß Anspruch 1.

Unter einer Windenergieanlage wird vorliegend insbesondere eine Horizontalachsenwindenergieanlage verstanden, die insbesondere dadurch gekennzeichnet ist, dass der Rotor im Betrieb eine Fläche überstreicht, die im Wesentlichen vertikal zur Erdoberfläche ausgerichtet ist, und eine Rotorachse aufweist, die im Wesentlichen eine horizontale Ausrichtung aufweist. Solche Windenergieanlagen werden auch als Horizontalachsen-Windenergieanlagen bezeichnet. Ferner wird unter einer Windenergieanlage insbesondere eine Windenergieanlage mit einer Nennleistung von mehr als 500 kW, und/oder mehr als 1000 kW, und/oder mehr als 1500 kW, und/oder mehr als 2000 kW, und/oder mehr als 2500 kW, und/oder mehr als 3000 kW, und/oder mehr als 3500 kW, und/oder mehr als 4000 kW, und/oder mehr als 4500 kW, und/oder mehr als 5000 kW, und/oder mehr als 5500 kW, und/oder mehr als 6000 kW verstanden.

Das Maschinenhaus ist im Betrieb vorzugsweise an einem Turmkopfende eines Windenergieanlagen-Turmes angeordnet. Das Turmkopfende des Turmes ist dasjenige Ende des Turmes, welches im Betrieb dem Fundament des Turmes abgewandt ist. Das Maschinenhaus an sich umfasst vorzugsweise eine Rotorwelle, eine Rotorwellenbremse, einen Maschinenträger, einen Generator und/oder gegebenenfalls ein Getriebe sowie eine Kupplung. Ein Getriebe und eine dazugehörige Kupplung werden in der Regel lediglich bei solchen Windenergieanlagen vorgesehen, die keinen Direktantrieb aufweisen, sodass eine Übersetzung vorgesehen ist. Darüber hinaus kann das Maschinenhaus Komponenten des Azimutantriebs aufweisen, wobei beispielsweise ein Motor und/oder eine, zwei oder mehrere Getriebestufe innerhalb des Maschinenhauses angeordnet sein können.

Das Maschinenhaus wird vorzugsweise derart auf dem Turm angeordnet, dass das Maschinenhaus um eine Achse drehbar ist. Ferner vorzugsweise ist das Maschinenhaus derart angeordnet, dass dieses um eine im Wesentlichen vertikale Längsachse des Turmes oder eine Achse parallel zur dieser Längsachse gedreht werden kann, sodass sich das Maschinenhaus in einer im Wesentlichen horizontalen Ebene drehen kann. Zu diesem Zweck ist das Maschinenhaus in der Regel auf dem Turmkopfende des Turmes mit einem Wälzlager und/oder einem Gleitlager gelagert. Darüber hinaus weist der Turm an dem Turmkopfende in der Regel einen Drehkranz auf, welches in der Regel als ein kreisrundes Element mit einer Innenverzahnung und/oder Außenverzahnung ausgebildet ist. An diesem Drehkranz greift der Azimutantrieb in der Regel mit einem Ritzel an, sodass durch ein Drehen des Ritzels an diesem Drehkranz ein Drehen des Maschinenhauses um eine Achse des Turms herum ermöglicht wird.

Der Erfindung liegt unter anderem die Erkenntnis zu Grunde, dass die angestrebten höheren Nennleistungen und die meist dadurch resultierenden größeren Bauformen von Windenergieanlagen darin resultieren, dass die Azimutantriebe ebenfalls größere Baugrößen oder eine höhere Anzahl an Azimutantrieben erfordern, um die größeren Lasten entsprechend der Anforderungen bewegen zu können. Die größeren Baugrößen der Azimutantriebe resultieren daher in einem weiteren Platzbedarf. Insbesondere beeinflusst die Größe der Azimutantriebe auch die Baugröße der Maschinenhäuser. Nichtsdestotrotz sind die Azimutantriebe aus funktionaler Perspektive derart auszugestalten, dass diese die mehreren Tonnen schweren Maschinenhäuser auf dem Turm drehen können. Dies resultiert insbesondere darin, dass auch die Azimutantriebe an sich ein hohes Gewicht aufweisen und eine große Bauform annehmen. Ein Azimutantrieb kann beispielsweise eine Erstreckung in Richtung einer Rotationsachse von 1,3 Metern annehmen. Obwohl durch konstruktive Maßnahmen bereits eine Reduktion dieser Erstreckung erreicht werden konnte, scheint weiteres Potenzial zur Reduktion dieser Erstreckung mit konventionellen Planetengetrieben nicht oder lediglich mit hohem Aufwand zu bestehen.

Die erfindungsgemäße Lösung ermöglichst es unter anderem, das Gewicht und die Größe der Azimutantriebe - und damit auch der Maschinenhäuser - zu reduzieren Der Erfindung liegt ferner die Erkenntnis zu Grunde, dass die derzeit eingesetzten Planetengetriebe in Azimutantrieben den oben genannten Anforderungen häufig nicht genügen. Obwohl insbesondere bei großen Windenergieanlagen bisher Planetengetriebe zu einem überwiegenden Anteil eingesetzt werden, können durch das Auffinden einer Alternative eine Vielzahl an Vorteilen erreicht werden.

Dies wird erfindungsgemäß dadurch erreicht, indem planetengetriebefreie elektrische Stellantriebe für den mindestens einen Azimutantrieb der Windenergieanlage eingesetzt werden.

Ein Azimutantrieb umfasst im Allgemeinen einen Motor, ein Getriebe und ein Ritzel, welches in eine Verzahnung am Turmkopfende, insbesondere in den Drehkranz, des Turms eingreift. Das Getriebe dient insbesondere dazu eine Abtriebsbewegung des Motors in eine Bewegung mit einer geringen Drehzahl und einem hohen Drehmoment umzuwandeln, mit der das Ritzel angetrieben wird. Aufgrund eines maximalen Übersetzungsverhältnisses einer Getriebestufe eines Planetengetriebes, wird vorzugsweise eine Mehrzahl an Planetengetriebe hintereinander geschaltet, um das Getriebe für den Azimutantrieb zu realisieren. Vorzugsweise werden drei oder mehr Planetengetriebestufen vorgesehen, um die notwendige Übersetzung zu realisieren.

Unter einem Planetengetriebe, auch Umlaufrädergetriebe genannt, wird ein Getriebe verstanden, das vorzugsweise mindestens eine Antriebswelle und eine Abtriebswelle sowie eine umlaufende Achse aufweist. Ein Planetengetriebe weist in der Regel ein mittig angeordnetes Sonnenrad auf und ein radial zum Sonnenrad beabstandetes und koaxial angeordnetes Hohlrad. Das Hohlrad weist ferner vorzugsweise eine Innenverzahnung auf. Der radiale Abstand zwischen dem Sonnenrad und dem Hohlrad wird mit mindestens einem, vorzugsweise außenverzahnten, Umlaufrad überbrückt, indem dieses an dem Sonnenrad und dem Hohlrad eine Gleit- und/oder Wälzbewegung während eines Zahneingriffs ausführt. Das mindestens eine Umlaufrad ist in der Regel an der umlaufenden Achse angeordnet. Ein Planetengetriebe zeichnet sich insbesondere dadurch aus, dass dieses eine Antriebs- und eine Abtriebswelle aufweist, wobei die Antriebs- und die Abtriebswelle über mindestens ein umlaufendes Umlaufrad miteinander gekoppelt sind. Ein Planetengetriebe kann alternativ auch Übertragungselemente aufweisen, die keine Verzahnung aufweisen. Grundsätzlich ist die Übertragung von Kräften im Sinne eines Planetengetriebes beispielsweise auch durch Haftkräfte möglich.

Um unter anderem kompaktere Azimutantriebe bereitzustellen, werden daher planetengetriebefreie elektrische Stellantriebe vorgesehen. Ferner ist in vielen Windenergieanlagen eine speziell für den Azimutantrieb vorgesehene Azimuteinheit angeordnet. Die Azimuteinheit ist vorzugsweise als Schaftabschnitt ausgebildet und zwischen dem Turm und dem Maschinenhaus angeordnet. In der Regel ist die Azimuteinheit ein Teil des Maschinenhauses und vorzugsweise drehsteif mit diesem verbunden. Eine derartige Azimuteinheit ist gegebenenfalls durch einen planetengetriebefreien elektrischen Stellantrieb nicht mehr oder lediglich in verkleinerter Bauweise erforderlich.

Planetengetriebefreie elektrische Stellantriebe ermöglichen ferner sehr hohe Übersetzungen je Getriebestufe, beispielsweise im Bereich von 250 bis 350 oder im Bereich von 10 bis 100, so dass der planetengetriebefreie elektrische Stellantriebe eine geringere Anzahl an Getriebestufen erfordert. Somit kann die Baugröße reduziert werden, da Planetengetriebe für derartige Anwendungen in der Regel eine maximale Übersetzung von 4 bis 8 oder von 4 bis 10 erreichen. Durch den Einsatz von planetengetriebefreien elektrischen Stellantrieben kann die Erstreckung, insbesondere orthogonal zu einer Drehachse, des Getriebes um mehr als 20% reduziert werden. Somit können die derzeitigen Baulängen von größer 155 cm, und/oder größer 185 cm, und/oder größer 221 cm deutlich reduziert werden.

Durch die planetengetriebefreien elektrischen Stellantriebe mit einem Nicht-Planeten-Getriebe kann eine höhere Leistungsdichte, und/oder eine höhere Belastbarkeit, und/oder eine höhere Verdrehsteifigkeit, und/oder eine höhere Belastbarkeit in den Azimutantrieben erreicht werden. Darüber hinaus kann das Getriebe mit einem geringeren Spiel bereitgestellt werden und ist ferner für die Übertragung hoher Drehmomente geeignet. Die planetengetriebefreien elektrischen Stellantriebe ermöglichen ferner eine größere Flexibilität bei der Gestaltung und Optimierung der strukturellen Komponenten. Außerdem weisen die planetengetriebefreien elektrischen Stellantriebe in der Regel ein geringeres Gewicht auf, so dass diese bei der Montage und/oder Wartung einfacher zu handhaben sind. Ferner kann die Motorbremse bei Bedarf in bzw. vor der ersten Getriebestufe vorgesehen werden, so dass weiterer Platzbedarf reduziert werden kann. Darüber hinaus kann gegebenenfalls die Anzahl der benötigten Azimutantriebe reduziert werden.

In einer bevorzugten Ausführungsvariante des Maschinenhauses ist vorgesehen, dass der mindestens eine Azimutantrieb an einem Maschinenträger des Maschinenhauses angeordnet ist. Durch die Anordnung des mindestens einen Azimutantriebs an dem Maschinenträger des Maschinenhauses wird vorzugsweise gewährleistet, dass der mindestens eine Azimutantrieb nicht oder lediglich zu einem geringen Anteil im Turmkopf angeordnet ist. Insbesondere wird somit eine Azimuteinheit, die im Wesentlichen zum Vorsehen der Azimutantriebe vorgesehen ist, nicht oder lediglich in verkleinerter Bauform benötigt. Die Anordnung ist insbesondere dahingehend zu verstehen, dass der mindestens eine Azimutantrieb im Wesentlichen nicht innerhalb des Turmes angeordnet ist, wobei einzelne Komponenten des Azimutantriebs dennoch in den Turm hineinragen können. Dies kann beispielsweise durch die Anordnung des Drehkranzes innerhalb des Turmes bewirkt werden, da in diesem Fall das zum Azimutantrieb gehörende Ritzel in den Turm hineinragen könnte. Der Antrieb selbst sowie ein Großteil der weiteren Komponenten des Azimutantriebs sind jedoch vorzugsweise innerhalb des Maschinenhauses angeordnet und somit nicht innerhalb des Turmes angeordnet.

Gemäß einer weiteren besonders bevorzugten Ausführungsvariante des Maschinenhauses ist vorgesehen, dass der mindestens eine Azimutantrieb teilweise oder vollständig innerhalb eines Hohlraumes des Maschinenträgers des Maschinenhauses angeordnet ist. Maschinenträger können als rohrförmiges Element ausgebildet sein. Diese Maschinenträger weisen vorzugsweise zwei als Öffnungen ausgebildete Eingänge auf, deren Durchtrittsrichtungen vorzugsweise nicht parallel angeordnet sind. Vielmehr können die Durchtrittsrichtungen dieser Öffnungen im Wesentlichen orthogonal zueinander angeordnet sein.

Durch diese Anordnung wird gewährleistet, dass der Maschinenträger mit einer ersten Öffnung an dem Turm drehbar angeordnet werden kann und somit im montierten Zustand eine vertikale Durchtrittsrichtung der ersten Öffnung aufweist. Ferner weist ein derartiger Maschinenträger eine zweite Öffnung auf, die eine Durchtrittsrichtung orthogonal zur Durchtrittsrichtung der ersten Öffnung aufweist, sodass im Betrieb diese Durchtrittsrichtung horizontal ausgerichtet ist. Eine horizontal ausgerichtete Rotorwelle, kann koaxial an dem die zweite Öffnung aufweisenden Abschnitt des Maschinenträgers angeordnet werden. Ein derartiger Maschinenträger ist in der Regel ein kompaktes Bauteil, wobei bestehende elektrische Stellantriebe mit Planetengetriebe in der Regel eine zu große Bauform aufweisen, um in einem derartigen Maschinenträger angeordnet zu werden. Durch die planetengetriebefreien elektrischen Stellantriebe, welche den mindestens einen Azimutantrieb ausbilden, besteht nunmehr die Möglichkeit des Einsatzes der Azimutantriebe innerhalb eines derartig ausgebildeten Maschinenträgers. Durch die Anordnung des Azimutantriebs innerhalb des Hohlraums des Maschinenträgers, wird in der Umgebung des Maschinenträgers Raum eingespart, der entweder für andere Komponenten der Windenergieanlage genutzt oder zur Verkleinerung der Gondel verwendet werden kann.

Gemäß einer weiteren besonders bevorzugten Ausführungsvariante des Maschinenhauses ist vorgesehen, dass der Hohlraum des Maschinenträgers als Gehäuse für den mindestens einen Azimutantrieb ausgebildet ist. Durch die Anordnung des mindestens einen Azimutantriebs innerhalb des Hohlraumes des Maschinenträgers besteht nunmehr die Möglichkeit, dass der Azimutantrieb an sich kein Gehäuse aufweist, da durch die Anordnung des Azimutantriebs innerhalb des Hohlraumes des Maschinenträgers, eine weitestgehende Abschirmung von umgebenden Störelementen gewährleistet sein kann. Hierdurch kann Gewicht eingespart und auch die Baugröße des Azimutantriebs verkleinert werden.

Gemäß der Erfindung umfasst der planetengetriebefreie elektrische Stellantrieb des mindestens einen Azimutantriebs ein Getriebe mit zwei Getriebestufen. In der Regel weisen die üblich eingesetzten Planetengetriebe eine Mehrzahl von Getriebestufen auf, um durch die entstehende Übersetzung eine in der Regel hohe Motordrehzahl in eine geringe Ritzeldrehzahl zu wandeln. Die Drehzahl des Motors in Azimutantrieben kann beispielsweise in einem Bereich zwischen 900 bis 3600 Umdrehungen pro Minute liegen. Die Drehgeschwindigkeit der Gondel wiederum beträgt in der Regel lediglich 0,25 bis 1 Bogengrad pro Sekunde. Die Übersetzung von einem Abtriebsritzel des Azimutantriebs zu einem Drehkranz der Windenergieanlage kann beispielsweise zwischen 9 und 13 oder auch zwischen 9 und 15 liegen, wobei diese Übersetzung in der Regel unter anderem in Abhängigkeit der Nennleistung und/oder der Größe bzw. des Durchmessers des Rotors ausgelegt wird.

Durch das Vorsehen des planetengetriebefreien elektrischen Stellantriebs und der daraus folgenden Anordnung eines Nicht-Planeten-Getriebes, welches demnach kein Planetengetriebe ist bzw. umfasst, kann die Anzahl der benötigten Getriebestufen auf zwei Getriebestufen reduziert werden. Durch eine derartige Reduktion der Getriebestufen wird neben der deutlichen Gewichtsersparnis zudem die Verschleißanfälligkeit des Getriebes reduziert. Darüber hinaus resultiert in der Regel jede Getriebestufe wiederum in einem Spiel des Getriebes, welches sich nachteilig auf die Leistungsfähigkeit und auf die Lebensdauer des Getriebes auswirkt, so dass mit den erfindungsgemäßen planetengetriebefreien elektrischen Stellantrieben auch eine Verbesserung der Störanfälligkeit einher geht.

Gemäß der Erfindung ist das Getriebe als Zahnstiftgetriebe ausgebildet, mit einer Mehrzahl von bewegbaren Zahnstiften und mit einem Antriebselement, welches als Profilscheibe mit ein, zwei oder mehreren Erhebungen ausgebildet ist. Insbesondere ist es bevorzugt, dass das Zahnstiftgetriebe ein feststehendes Hohlrad, ein drehbares Hohlrad innerhalb des feststehenden Hohlrades und eine nicht runde Profilscheibe innerhalb dieses drehbaren Hohlrades aufweist, die vorzugsweise koaxial angeordnet sind. Die Profilscheibe ist ferner vorzugsweise von einem Motor antreibbar. Darüber hinaus weist das drehbare Hohlrad einen, zwei oder mehrere Zahnstifte auf, die in tangentialer Richtung eine Kraft auf das drehbare Hohlrad übertragen können.

Gemäß der Erfindung weist das Getriebe eine Antriebswelle und eine Abtriebswelle auf, wobei eine Kraftübertragung von der Antriebswelle zur Abtriebswelle durch translatorisch bewegte Zahnstifte erfolgt, deren Translationsrichtung radial zur Antriebswelle und/oder Abtriebswelle ausgerichtet ist.

Vorzugsweise treibt ein Motor eine Profilscheibe rotatorisch an, wobei an einer Außenumfangsfläche der Profilscheibe in radialer Ausrichtung Zahnstifte angeordnet sind. Die Zahnstifte sind ferner in Umfangsrichtung, also in tangentialer Richtung, mit einem drehbaren Hohlrad verbunden, wobei die Profilscheibe innerhalb dieses Hohlrades koaxial angeordnet ist. Das drehbare Hohlrad ist wiederum in dem feststehenden Hohlrad mit einer Innenverzahnung koaxial angeordnet, ohne einen unmittelbaren Kontakt mit diesem aufzuweisen. Der Kontakt zwischen dem drehbaren Hohlrad und dem feststehenden Hohlrad wird mittelbar durch die Zahnstifte realisiert. Durch das sukzessive Verschieben der Zahnstifte in radialer Richtung durch die nicht runde Profilscheibe und entsprechender Anordnung der Zahnstifte und Ausbildung der Verzahnung im feststehenden Hohlrad kann das drehbare Hohlrad innerhalb des feststehenden Hohlrades insbesondere durch tangentiale Kräfte angetrieben werden. Die tangentialen Kräfte werden von den Zahnstiften auf das drehbare Hohlrad übertragen, wobei die tangentialen Kräfte auf die Zahnstifte wiederum durch Scherkräfte entstehen. Die Scherkräfte entstehen durch das nicht-mittige Eingreifen der Zahnstifte in Verzahnungsausnehmungen des feststehenden Hohlrades. Somit kann eine erste Getriebestufe eines planetengetriebefreien Stellantriebs realisiert werden. Durch die Kopplung des drehbaren Hohlrades mit einer weiteren, vorzugsweise innenliegenden, Profilscheibe, welche wiederum durch Zahnstifte ein drehbares Hohlrad innerhalb eines feststehenden Hohlrades antreibt, kann eine weitere Getriebestufe realisiert werden.

Gemäß einer weiteren besonders bevorzugten Ausführungsvariante des Maschinenhauses ist vorgesehen, dass das Getriebe je Getriebestufe eine Übersetzung von 10 bis 100 aufweist. Insbesondere ist es bevorzugt, dass die Übersetzung 20 bis 90, und/oder 30 bis 80, und/oder 40 bis 70, und/oder 80 bis 100, und/oder 10-30, und/oder 10-20, und/oder 10-15, und/oder 15-30, und/oder 15-20 aufweist.

Gemäß einer weiteren besonders bevorzugten Ausführungsvariante des Maschinenhauses ist vorgesehen, dass der planetengetriebefreie elektrische Stellantrieb eine Bremse umfasst, welche vorzugsweise an einem feststehenden Hohlrad des Getriebes angeordnet ist und ausgebildet ist eine Welle des Getriebes zu beschleunigen. Eine zur Bremse korrespondierende Bremsscheibe ist vorzugsweise an einer Welle des planetengetriebefreien elektrischen Stellantriebs angeordnet, wobei die Anordnung zwischen dem Motor und der ersten Getriebestufe besonderes bevorzugt ist. Diese Beschleunigung ist vorzugsweise negativ ausgebildet, sodass die Bremse in der Lage ist, die Rotationsgeschwindigkeit einer Welle des Getriebes zu verzögern. Die Bremse ist insbesondere als eine Festhaltebremse ausgebildet, um die Gondel bei sehr geringen Gierwinkelabweichungen in den Wind zu halten. Die Gierwinkelabweichung ist insbesondere die Differenz zwischen einer aktuellen Windrichtung und der Windrichtung auf die die Gondel aktuell ausgerichtet ist. Für eine festgelegte Gierwinkelabweichung, beispielsweise plus/minus 10 Bogengrad, wird die Gondel relativ zum Turm vorzugsweise von der Festhaltebremse arretiert und nicht kontinuierlich dem Wind nachgeführt.

Ferner wird beschrieben ein Rotor für eine Windenergieanlage, insbesondere eine Windenergieanlage mit einer Nennleistung von mehr als 3000 kW, mit einer Rotornabe und mindestens einem Rotorblatt, mit mindestens einem zur Rotorblattverstellung eingesetzten Pitchantrieb, wobei der mindestens eine Pitchantrieb als planetengetriebefreier elektrischer Stellantrieb ausgebildet ist. Insbesondere ist ein derartiger Rotor für eine Windenergieanlage mit einer Nennleistung von mehr als 500 kW, und/oder mehr als 1000 kW, und/oder mehr als 1500 kW, und/oder mehr als 2000 kW, und/oder mehr als 2500 kW, und/oder mehr als 3000 kW, und/oder mehr als 3500 kW, und/oder mehr als 4000 kW, und/oder mehr als 4500 kW, und/oder mehr als 5000 kW, und/oder mehr als 5500 kW, und/oder mehr als 6000 kW ausgebildet.

Der Rotor umfasst eine Rotornabe, welche angeordnet und ausgebildet ist, dass ein, zwei oder mehrere Rotorblätter an dieser angeordnet werden können. Besonders bevorzugt ist es, dass an der Rotornabe drei Rotorblätter angeordnet werden. Darüber hinaus weist der Rotor mindestens einen Pitchantrieb zur Rotorblattverstellung auf. Der Pitchantrieb ist vorzugsweise angeordnet und ausgebildet, ein, zwei oder mehrere Rotorblätter, welche an der Rotornabe angeordnet sind, um eine Längsachse des jeweiligen Rotorblattes zu verstellen. Insbesondere ist es bevorzugt, dass für jedes Rotorblatt ein, zwei oder mehrere separate Pitchantriebe zur Rotorblattverstellung angeordnet ist bzw. sind. Der Pitchantrieb ist erfindungsgemäß als planetengetriebefreier elektrischer Stellantrieb ausgebildet, sodass der Pitchantrieb einen Stellantrieb mit einem Getriebe umfasst, wobei dieses als Nicht-Planeten-Getriebe ausgebildet ist und somit kein Planetengetriebe ist bzw. umfasst. Zur Definition eines Planetengetriebes wird auf die zuvor erfolgte Beschreibung des ersten Aspektes der Erfindung verwiesen.

Der Erfindung liegt ferner die Erkenntnis zu Grunde, dass die Reduktion von Bauteil- und/oder Baugruppengewichten eine Vielzahl an Vorteilen mit sich bringt. Der Rotor ist in der Regel eine bewegte Komponente der Windenergieanlage und somit eine bewegte Masse. In der Regel ist es das Ziel bei technischen Anlagen, die bewegte Masse zu Reduzieren, da bewegte Massen einerseits Schwingungen hervorrufen, die in der Regel auszugleichen sind, und andererseits wiederum Kräfte auf andere bewegte und/oder nicht bewegte Bauteile übertragen. Insbesondere durch Beschleunigungen werden höhere Kräfte durch bewegte Massen auf andere Bauteile übertragen als von anderen nicht bewegten Bauteilen. Daher ist eine möglichst kompakte Bauform der einzelnen Komponenten bevorzugt. Durch das Vorsehen planetengetriebefreier elektrischer Stellantriebe als Pitchantrieb, die eine deutlich geringere Baugröße als übliche Stellantriebe aufweisen, kann der Pitchantrieb an sich und/oder die Rotornabe kleiner ausgeführt werden, sodass gegebenenfalls die gesamte Gondel kleiner ausgeführt werden kann.

Durch die planetengetriebefreien elektrischen Stellantriebe mit einem Nicht-Planeten-Getriebe kann eine höhere Leistungsdichte, und/oder eine höhere Belastbarkeit, und/oder eine höhere Verdrehsteifigkeit, und/oder eine höhere Belastbarkeit in den Pitchantrieben erreicht werden. Darüber hinaus kann das Getriebe mit einem geringeren Spiel bereitgestellt werden und ist ferner für die Übertragung hoher Drehmomente geeignet. Die planetengetriebefreien elektrischen Stellantriebe ermöglichen ferner eine größere Flexibilität bei der Gestaltung und Optimierung der strukturellen Komponenten. Außerdem weisen die planetengetriebefreien elektrischen Stellantriebe in der Regel ein geringeres Gewicht auf, so dass diese bei der Montage und/oder Wartung einfacher zu handhaben sind. Ferner kann die Motorbremse bei Bedarf in bzw. vor der ersten Getriebestufe vorgesehen werden, so dass der Platzbedarf weiter reduziert werden kann. Ferner kann gegebenenfalls die Anzahl der Pitchantriebe pro Blatt reduziert werden, da die Pitchantriebe nun eine höhere Leistungsdichte aufweisen. Dies ist insbesondere bei großen Rotorblättern relevant. Durch diese Reduktion wird nicht nur der konstruktive Aufwand reduziert, sondern auch die Kosten können verringert werden. Darüber hinaus können derartige Pitchantriebe die Grenzen des technisch Machbaren erweitern, indem durch derart leistungsstarke Pitchantriebe auch größere Rotorblätter erst ermöglicht werden.

Gemäß einer bevorzugten Ausführungsvariante des Rotors ist vorgesehen, dass der planetengetriebefreie elektrische Stellantrieb ein Getriebe mit einer Getriebestufe umfasst. Konventionelle Getriebe, insbesondere Planetengetriebe, elektrischer Stellantriebe zur Rotorblattverstellung weisen in der Regel zwei oder mehr Getriebestufen auf, um die notwendige Übersetzung vom Motor zum Ritzel bereitzustellen. Durch den erfindungsgemäßen planetengetriebefreien elektrischen Stellantrieb kann jedoch mit einer einzelnen Getriebestufe die notwendige Übersetzung bereitgestellt werden, sodass das einzusetzende Getriebe kompaktere Abmaße und ein geringeres Gewicht aufweist. Darüber hinaus ist ein Getriebe mit einer geringeren Getriebestufenanzahl durch geringeren Verschleiß und insbesondere durch ein geringeres Spiel gekennzeichnet, sodass hier weitere Vorteile realisiert werden können.

Die Drehzahl des Motors in Pitchantrieben kann beispielsweise in einem Bereich zwischen 900 bis 3600 Umdrehungen pro Minute liegen. Die Dreh- bzw. Verstellgeschwindigkeit der Rotorblätter beträgt in der Regel vorzugsweise 2 bis 6 Bogengrad pro Sekunde, kann aber auch beispielsweise bis zu 12 Bogengrad pro Sekunde betragen, etwa in Notfällen. Die Übersetzung von einem Abtriebsritzel des Pitchantriebs zu einem Drehkranz der Windenergieanlage kann beispielsweise zwischen 180-250 liegen, wobei diese Übersetzung in der Regel unter anderem in Abhängigkeit der Nennleistung und/oder der Größe bzw. des Durchmessers des Rotors ausgelegt wird.

Gemäß einer weiteren bevorzugten Ausführungsvariante des Rotors ist vorgesehen, dass das Getriebe je Getriebestufe eine Übersetzung von 10 bis 250 aufweist. Insbesondere ist es bevorzugt, dass die Übersetzung 20 bis 200, und/oder 30 bis 150, und/oder 40 bis 120, und/oder 150 bis 250, und/oder 100 bis 250 und/oder 10-30, und/oder 10-20, und/oder 10-15, und/oder 15-30, und/oder 15-20 aufweist.

Gemäß einer weiteren besonders bevorzugten Ausführungsvariante des Rotors ist vorgesehen, dass der planetengetriebefreie elektrische Stellantrieb eine Bremse umfasst, welche vorzugsweise an einem feststehenden Hohlrad des Getriebes angeordnet ist und/oder ausgebildet ist eine Welle des Getriebes zu beschleunigen.

Gemäß einer weiteren besonders bevorzugten Ausführungsvariante des Rotors ist vorgesehen, dass das Getriebe als Zahnstiftgetriebe ausgebildet ist, mit vorzugsweise einer Mehrzahl von bewegbaren Zahnstiften und/oder ferner vorzugsweise mit einem Antriebselement, welches als Profilscheibe mit ein, zwei oder mehreren Erhebungen ausgebildet ist. Insbesondere ist es bevorzugt, dass das Zahnstiftgetriebe ein feststehendes Hohlrad, ein drehbares Hohlrad innerhalb des feststehenden Hohlrades und eine nicht runde Profilscheibe innerhalb dieses drehbaren Hohlrades aufweist, die vorzugsweise koaxial angeordnet sind. Die Profilscheibe ist ferner vorzugsweise von einem Motor antreibbar. Darüber hinaus weist das drehbare Hohlrad einen, zwei oder mehrere Zahnstifte auf, die in tangentialer Richtung eine Kraft auf das drehbare Hohlrad übertragen können.

Gemäß einer weiteren besonders bevorzugten Ausführungsvariante des Rotors ist vorgesehen, dass das Getriebe eine Antriebswelle und eine Abtriebswelle aufweist, wobei eine Kraftübertragung von der Antriebswelle zu Abtriebswelle durch translatorisch bewegte Zahnstifte erfolgt, deren Translationsrichtung vorzugsweise radial zur Antriebswelle und/oder Abtriebswelle ausgerichtet ist. Die Zahnstifte sind vorzugsweise derart angeordnet, dass diese von der Profilscheibe in radialer Richtung antreibbar sind, in Umfangsrichtung mit dem drehbaren Hohlrad gekoppelt sind und darüber hinaus angeordnet sind, dass diese mit einem Eingriffsende in eine Innenverzahnung des feststehenden Hohlrades eingreifen können.

Für weitere Vorteile, Ausführungsvarianten und Ausführungsdetails des Rotors und seiner möglichen Fortbildungen, insbesondere des planetengetriebefreien elektrischen Stellantriebs, wird auch auf die zuvor erfolgte Beschreibung zu den entsprechenden Merkmalen und Fortbildungen des Maschinenhauses verwiesen, insbesondere des planetengetriebefreien elektrischen Stellantriebs.

Gemäß einem weiteren Aspekt der Erfindung wird die eingangs genannte Aufgabe gelöst, durch eine Windenergieanlage gemäß Anspruch 7, insbesondere Windenergieanlage mit einer Nennleistung von mehr als 3000 kW, mit einem Turm und einem an einem oberen Ende des Turms angeordneten Maschinenhaus und einem Rotor, wobei das Maschinenhaus ein Maschinenhaus gemäß mindestens einer der im Vorherigen ausgeführten Ausführungsvarianten ist. Eine derartige Windenergieanlage zeichnet sich dadurch aus, dass die Azimutantriebe eine kompakte Bauform aufweisen. Dadurch kann beispielsweise die Rotornabe und/oder der Maschinenträger und/oder der Turmkopf und/oder die Gondel kompakter gestaltet werden. Ferner können die umgebenden Komponenten verbessert ausgestaltet oder angeordnet werden.

Durch die reduzierte Anzahl der Getriebestufen im Pitchantrieb und/oder im Azimutantrieb kann sich eine erfindungsgemäße Windenergieanlage ferner durch eine reduzierte Störanfälligkeit auszeichnen. Darüber hinaus vereinfachen sich die Montage und die Wartung der Windenergieanlage. Des Weiteren können durch die erläuterten planetengetriebefreien elektrischen Stellantriebe mit einem Nicht-Planeten-Getriebe eine höhere Leistungsdichte, und/oder eine höhere Belastbarkeit, und/oder eine höhere Verdrehsteifigkeit in den Pitchantrieben und/oder Azimutantrieben erreicht werden. Darüber hinaus kann das Getriebe mit einem geringeren Spiel bereitgestellt werden und ist ferner für die Übertragung hoher Drehmomente geeignet.

Gemäß einem weiteren Aspekt der vorliegenden Erfindung wird die eingangs genannte Aufgabe gelöst, durch die Verwendung eines planetengetriebefreien elektrischen Stellantriebs, insbesondere mit einem Zahnstiftgetriebe, als Pitchantrieb zur Rotorblattverstellung von Rotorblättern eines Rotors einer Windenergieanlage, insbesondere einer Windenergieanlage mit einer Nennleistung von mehr als 3000 kW, und/oder als Azimutantrieb zur Windrichtungsnachführung eines Maschinenhauses einer Windenergieanlage, insbesondere einer Windenergieanlage mit einer Nennleistung von mehr als 3000 kW, gemäß Anspruch 8.

Gemäß einem weiteren Aspekt der vorliegenden Erfindung wird die eingangs genannte Aufgabe gelöst, durch ein Verfahren zur Windrichtungsnachführung eines Maschinenhauses einer Windenergieanlage, insbesondere einer Windenergieanlage mit einer Nennleistung von mehr als 3000 kW, umfassend Bereitstellen eines Maschinenhauses nach mindestens einer der im vorhergehenden beschriebenen Ausführungsvarianten, Ansteuerung des mindestens einen planetengetriebefreien elektrischen Stellantriebs, Antreiben eines Ritzels und Drehen des Maschinenhauses um eine, vorzugsweise vertikale, Rotationsachse des Maschinenhauses gemäß Anspruch 9.

Beschrieben wird ferner ein Verfahren zur Rotorblattverstellung von Rotorblättern eines Rotors einer Windenergieanlage, insbesondere einer Windenergieanlage mit einer Nennleistung von mehr als 3000 kW, umfassend Bereitstellen eines Rotors nach mindestens einer der vorhergehenden Ausführungsvarianten, Ansteuerung von mindestens einem planetengetriebefreien elektrischen Stellantrieb, Antreiben eines Ritzels und Drehen eines Rotorblattes um eine Längsachse.

Die erfindungsgemäßen Verfahren und ihre möglichen Fortbildungen weisen Merkmale beziehungsweise Verfahrensschritte auf, die sie insbesondere dafür geeignet machen, für ein erfindungsgemäßes Maschinenhaus und/oder einen beschriebenen Rotor und ihre jeweiligen Fortbildungen verwendet zu werden. Für weitere Vorteile, Ausführungsvarianten und Ausführungsdetails dieser weiteren Aspekte und Ihrer möglichen Fortbildung wird auch auf die zuvor erfolgte Beschreibung zu den entsprechenden Merkmalen und Fortbildungen des Maschinenhauses und/oder des Rotors verwiesen.

Bevorzugte Ausführungsformen der Erfindung werden beispielhaft anhand der beiliegenden Figuren erläutert. Es zeigen:
- Figur 1:: eine schematische Ansicht einer Windenergieanlage;
- Figur 2:: eine schematische gebrochene dreidimensionale Ansicht eines Ausschnitts einer im Stand der Technik bekannten Windenergieanlage;
- Figur 3a:: eine schematische, geschnittene zweidimensionale Ansicht eines Teils einer Azimuteinheit mit einem im Stand der Technik bekannten Azimutantrieb;
- Figur 3b:: eine schematische, geschnittene zweidimensionale Ansicht einer beispielhaften Ausführungsform eines Teils einer Azimuteinheit gemäß der Erfindung mit einem planetengetriebefreien elektrischen Azimutantrieb;
- Figur 4:: eine geschnittene Seitenansicht einer beispielhaften Ausführungsform eines planetengetriebefreien elektrischen Stellantriebs;
- Figur 5:: eine schematische, zweidimensionale Schnittdarstellung einer beispielhaften Ausführungsform eines Maschinenträgers.

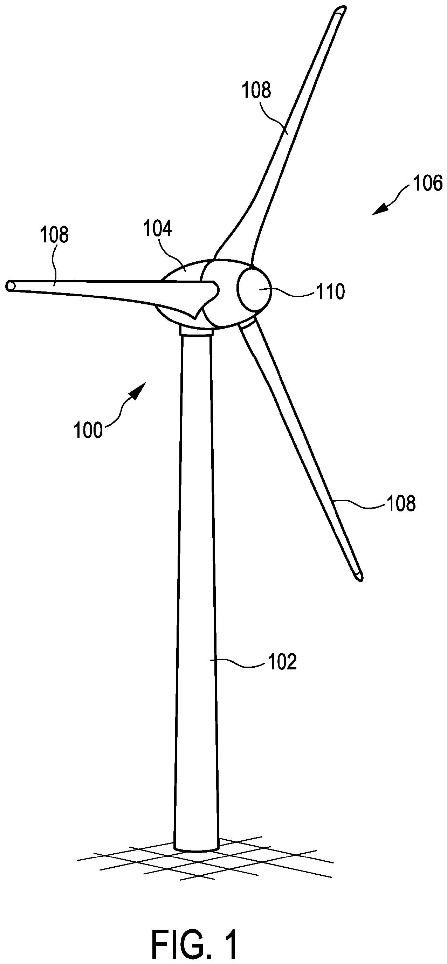

In den Figuren sind gleiche oder im Wesentlichen funktionsgleiche oder-ähnliche Elemente mit den gleichen Bezugszeichen bezeichnet. Figur 1 zeigt eine schematische Ansicht einer beispielhaften Ausführungsform einer Windenergieanlage. Figur 1 zeigt insbesondere eine Windenergieanlage 100 mit einem Turm 102 und einer Gondel 104.

An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator an der Gondel 104 an. Die Windenergieanlage 100 gemäß Figur 1 weist vorzugsweise ein erfindungsgemäßes Maschinenhaus und/oder einen beschriebenen Rotor auf.

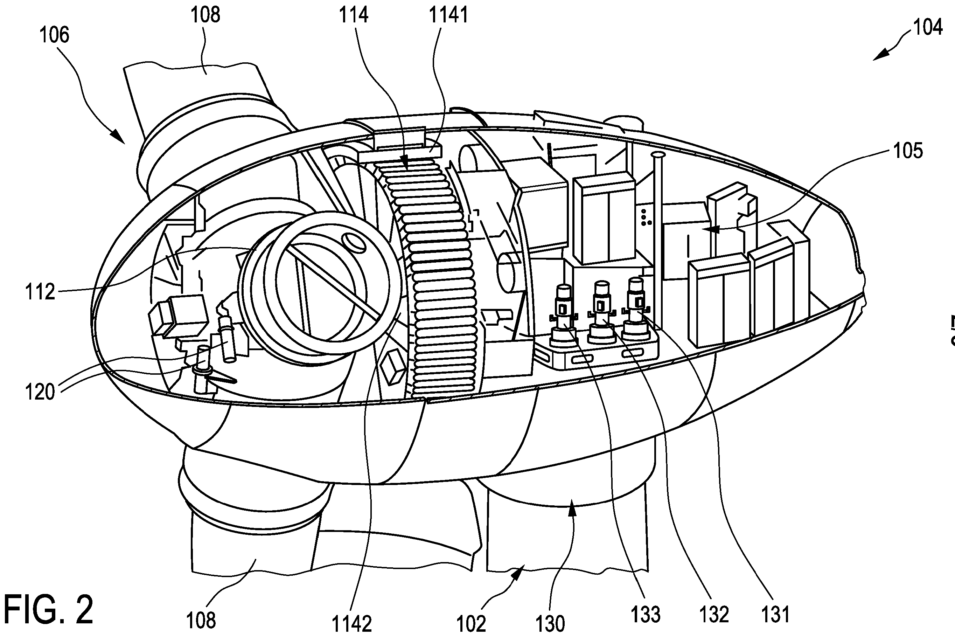

Figur 2 zeigt eine schematische gebrochene dreidimensionale Ansicht eines Ausschnitts einer im Stand der Technik bekannten Windenergieanlage. Figur 2 zeigt insbesondere die Gondel 104 mit einem Maschinenhaus 105, wobei an der Gondel 104 ein Rotor 106 angeordnet ist. Der Rotor 106 umfasst insgesamt drei Rotorblätter 108, welche an der Rotornabe 112 angeordnet sind. Die Rotorblätter sind vorliegend um eine Längsachse drehbar angeordnet. Das Drehen eines Rotorblatts um seine Längsachse wird mittels eines Pitchantriebs ermöglicht. An einem mit der Rotornabe 112 drehsteif verbundenen Achszapfen ist ein Generator 114 angeordnet, wobei insbesondere der Generatorrotor 1142 drehsteif mit der Welle verbunden ist. Ein Generatorstator 1141 ist als Ring ausgebildet, wobei der Generatorrotor 1142 innerhalb des Generatorstators 1141 koaxial rotiert. Die Gondel 104 mit dem Rotor 106 ist drehbar auf einem Turm 102 angeordnet. Zwischen dem Turm 102 und der Gondel 104 ist eine Azimuteinheit 130 angeordnet, die als rohrförmiges Element an einem Bereich der Gondel 104 angeordnet ist, der dem Turm 102 zugewandt ist. Vorzugsweise ist die Azimuteinheit 130 drehsteif an der Gondel 104 und ferner vorzugsweise an einem Maschinenträger angeordnet und ist somit ferner vorzugsweise ein Bestandteil des Maschinenhauses 105. Ferner weist die Azimuteinheit 130 eine Mittelachse auf, die im Betriebszustand der Windenergieanlage im Wesentlichen koaxial zu einer Mittelachse des Turmes 102 angeordnet ist.

Um die Gondel 104 auf dem Turm 102 in einer im Wesentlichen horizontalen Ebene zu drehen, sind unter anderem innerhalb der Azimuteinheit 130 und innerhalb des Maschinenhauses 105 ein erster Azimutantrieb 131, ein zweiter Azimutantrieb 132 und ein dritter Azimutantrieb 133 angeordnet, welche ausgebildet sind die Gondel 104 mit der Azimuteinheit 130 und dem Rotor 106 in einer im Wesentlichen horizontalen Ebene relativ zum Turm 102 zu drehen. Dafürgreift je Azimutantrieb 131, 132, 133 ein außenverzahntes Ritzel in einen innenverzahnten Drehkranz ein, der drehsteif an dem Turm 102 angeordnet ist. Die Höhe der Azimuteinheit 130 in Längsrichtung des Turmes 102 wird unter anderem von der Bauhöhe der Azimutantriebe 131, 132, 133 beeinflusst. Je höher die Bauhöhe der Azimutantriebe 131, 132, 133, desto höher ist in der Regel auch die Höhe der Azimuteinheit 130. Insbesondere ist in Figur 2 zu erkennen, dass die im Stand der Technik eingesetzten Azimutantriebe 131, 132, 133 eine Bauhöhe aufweisen, die eine große Azimuteinheit 130 erfordern, da eine Anordnung solch großer Azimutantriebe 131, 132, 133 innerhalb eines kompakten Maschinenträgers und/oder einer kompakten Gondel 104 nicht oder nur mit deutlichen Nachteilen möglich wäre.

Die Azimuteinheit 130 gehört zu den bewegten Bauteilen einer Windenergieanlage. Daher ist eine möglichst kleine Baugröße wünschenswert, um die bewegte Masse zu reduzieren, so dass aufzubringende Kräfte unter anderem von Stellantrieben so gering wie möglich sind. Ferner ist der konstruktive Aufwand zur Gestaltung der Azimuteinheit 130 groß, so dass häufig angestrebt wird, dass die Azimuteinheit 130 verkleinert oder obsolet wird. Dies gilt insbesondere für größere Windenergieanlage mit Nennlasten von mehr als 500 kW, und/oder mehr als 1000 kW, und/oder mehr als 1500 kW, und/oder mehr als 2000 kW, und/oder mehr als 2500 kW, und/oder mehr als 3000 kW, und/oder mehr als 3500 kW, und/oder mehr als 4000 kW, und/oder mehr als 4500 kW, und/oder mehr als 5000 kW, und/oder mehr als 5500 kW, und/oder mehr als 6000 kW. Ferner ist in Figur 2 die ebenfalls große Bauhöhe der Pitchantriebe 120 zu erkennen, so dass die Pitchantriebe 120 analog zu den Azimutantrieben 131, 132, 133 einen beträchtlichen Platzbedarf aufweisen.

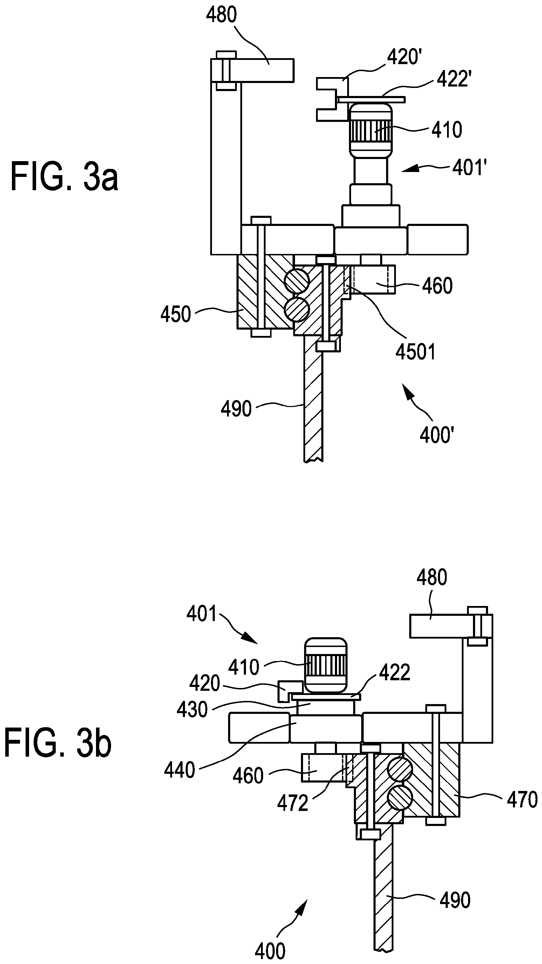

Figur 3a zeigt eine schematische, geschnittene zweidimensionale Ansicht eines Teils einer Azimuteinheit mit einem im Stand der Technik bekannten Azimutantrieb. Figur 3b zeigt hingegen eine gespiegelte Situation mit einem planetengetriebefreien elektrischen Azimutantrieb gemäß der Erfindung. Der deutlich geringere Platzbedarf im erfindungsgemäßen Maschinenhaus mit einer Azimuteinheit nach Figur 3b gegenüber einem Maschinenhaus mit einer Azimuteinheit nach Figur 3a für eine Windenergieanlage mit gleicher Nennleistung wird unmittelbar deutlich.

Die Azimuteinheit 400' gemäß dem Stand der Technik in Figur 3a ist angeordnet und ausgebildet, um einen Maschinenträger 480 in einer horizontalen Ebene relativ zu einem Turm, dessen Wandung 490 teilweise dargestellt ist, zu drehen. Der Maschinenträger 480 ist mit der Azimuteinheit 400' drehbar auf dem Turm gelagert, wobei vorliegend diese Lagerung mit einem doppelreihigen Kugelwälzlager 450 realisiert ist. Das an der Turmwandung 490 drehsteif befestigte Wälzlagerteil weist darüber hinaus eine Innenverzahnung 4501 auf.

Die Azimuteinheit 400 gemäß der Erfindung in Figur 3b ist drehsteif mit dem Maschinenträger 480 verbunden. Ein Azimutantrieb 401 ist derart innerhalb der Azimuteinheit 400 angeordnet, dass ein Ritzel 460 des Azimutantriebs 401 in die Innenverzahnung 472 des mit der Turmwandung 490 befestigten Teils des Wälzlagers 450 eingreift. Das Ritzel 460 wird von einem Motor 410 angetrieben, wobei zwischen dem Motor 410 und dem Ritzel 460 lediglich eine erste Getriebestufe 430 und eine zweite Getriebestufe 440 angeordnet sind, sodass eine hohe Drehzahl des Motors 410 in eine geringe Drehzahl mit einem hohen Drehmoment des Ritzels 460 gewandelt wird. Darüber hinaus weist die Azimuteinheit 400 eine Motorbremse 420 auf, die angeordnet und ausgebildet ist, eine Bremsscheibe 422, welche zwischen der ersten Getriebestufe 430 und dem Motor 410 angeordnet ist, abzubremsen. Dadurch kann wiederum im Vergleich zum im Stand der Technik bekannten Anordnung, beispielsweise aus Figur 3a, der Platzbedarf sowie der Konstruktions- und Montageaufwand reduziert werden.

Figur 3a zeigt hingegen eine schematische geschnittene zweidimensionale Ansicht einer im Stand der Technik bekannten Azimuteinheit. Der Azimutantrieb 401'der Azimuteinheit 400`gemäß dem Stand der Technik unterscheidet sich, insbesondere und im Vergleich zur in Figur 3b gezeigten Azimuteinheit 400, dadurch, dass dieser insgesamt vier Getriebestufen zwischen dem Motor 410 und dem Abtriebsritzel 460 aufweist. Diese Getriebestufen sind im Stand der Technik insbesondere als Planetengetriebe ausgebildet. Darüber hinaus weist der Azimutantrieb 401' eine integrierte Bremse auf, die eine Bremsscheibe 422` und eine Bremse 420` umfasst, wobei die Bremsscheibe 422` und die Bremse 420` an der dem Getriebe abgewandten Seite des Motors 410 angeordnet ist.

Neben dem geringeren Platzbedarf, Konstruktions- und Montageaufwand ermöglicht es die erfindungsgemäße Lösung ferner, eine geringere Anzahl an beweglichen Elementen vorzusehen, so dass auch die Störanfälligkeit und/oder der Wartungsaufwand reduziert werden können.

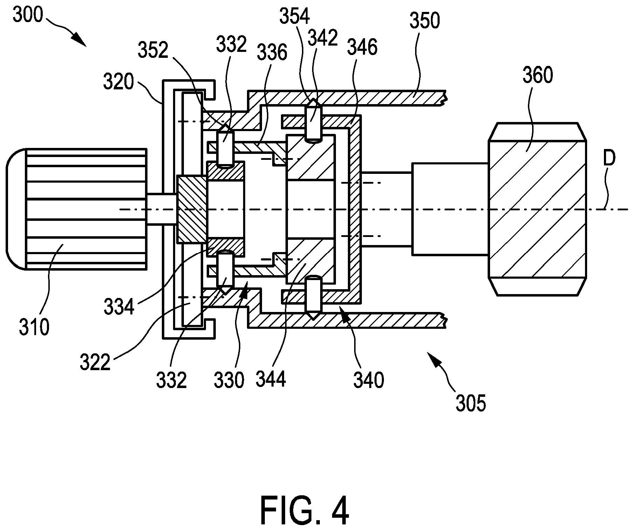

Figur 4 zeigt eine geschnittene Seitenansicht einer beispielhaften Ausführungsform eines planetengetriebefreien elektrischen Stellantriebs, wie er beispielsweise in einer Einbausituation wie in Figur 3b eingesetzt werden kann. Wie auch in Figur 4 zu erkennen ist, kann ein besonders kompakter Aufbau des Stellantriebs realisiert werden, so dass der Einsatz als Pitchantrieb und/oder als Azimutantrieb gerade auch bei Anlagen mit großer Nennleistung bevorzugt ist.

Der in Figur 4 dargestellte planetengetriebefreie elektrische Stellantrieb 300 umfasst im Wesentlichen ein Getriebe 305, einen Motor 310 und ein Ritzel 360. Der Motor 310 treibt eine erste Profilscheibe 334 rotatorisch um eine Drehachse D an. Die erste Profilscheibe 334 weist orthogonal zu der Drehachse D einen nichtrunden Querschnitt auf, wobei beispielsweise ein ovaler Querschnitt oder ein Nockenquerschnitt möglich ist. An der radialen Umfangsfläche der ersten Profilscheibe 334 ist eine Mehrzahl von Zahnstiften 332 angeordnet. Die Zahnstifte weisen eine Längsachse auf, die im Wesentlichen parallel zu einer radialen Richtung zur Drehachse D angeordnet ist. An dem Ende des Zahnstifts 332, das der Drehachse abgewandt ist, weist dieser eine verjüngte Geometrie auf, die ausgebildet und angeordnet ist, in eine Innenverzahnung einzugreifen und dort eine Scherkraft in Umfangsrichtung zu bewirken. Insbesondere weist der Zahnstift 332 an diesem Ende eine Geometrie auf, wie sie ein Zahn eines Zahnrades eines Getriebes aufweist. Die Zahnstifte 332 sind derart angeordnet, dass diese lediglich eine translatorische Bewegung ausführen können, wobei die translatorische Bewegung im Wesentlichen parallel zu einer radialen Richtung der Drehachse D ausgerichtet ist. In tangentialer Richtung der ersten Profilscheibe 334 sind die Zahnstifte 332 nicht drehsteif mit der ersten Profilscheibe 334 verbunden, so dass die Profilscheibe vorzugsweise ausschließlich eine translatorische Bewegung bei den Zahnstiften 332 bewirken kann. Ferner sind die Zahnstifte 332 vorzugsweise in radialer Richtung bewegbar an einem ersten Hohlrad 336 angeordnet. In tangentialer Richtung sind die Zahnstifte 332 hingegen vorzugsweise mit dem ersten Hohlrad 336 fest verbunden, insbesondere drehsteif verbunden. Neben der ersten Profilscheibe 334 und dem ersten Hohlrad 336 ist koaxial zu diesen ein feststehendes Hohlrad 350 angeordnet, das insbesondere relativ zu der ersten Profilscheibe 334 und dem ersten Hohlrad 336 ortsfest angeordnet ist.

In radialer Richtung der ersten Profilscheibe 334 und in Richtung der translatorischen Bewegungsrichtung der Zahnstifte 332 weist das feststehende Hohlrad 350 eine erste Innenverzahnung 352 auf. Die erste Innenverzahnung 352 des feststehenden Hohlrades 350 ist insbesondere dadurch gekennzeichnet, dass diese einen Zahnabstand aufweist, der ein nicht ganzzahliges Vielfaches des Zahnabstandes der Zahnstifte 332 beträgt. Der Zahnabstand wird vorzugsweise von Zahnkopf zu Zahnkopf zweier benachbarter Zähne ermittelt. Ein nicht ganzzahliges Vielfaches bedeutet hier insbesondere, dass ein Quotient aus den zwei Abständen keine ganzzahlige Zahl, wie 1, 2 oder 3, ergibt. Ein nicht ganzzahliges Vielfaches kann jedoch auch eine Zahl kleiner 1, beispielsweise 0,8, bedeuten. Durch diese Anordnung der ersten Profilscheibe 334, der Zahnstifte 332, des ersten Hohlrades 336 sowie der ersten Verzahnung 352 im feststehenden Hohlrad 350 rotiert das erste Hohlrad 336 um die Drehachse D, sobald der Motor 310 die unrunde Profilscheibe 334 rotierend antreibt. Dies erfolgt insbesondere durch das Eingreifen mindestens eines Zahnstifts 332 in die erste Verzahnung 352, wobei durch die zuvor erläuterten Zahnabstände kein exakt mittiges Eingreifen des Zahnstiftes 332 in einen Zahnzwischenraum der ersten Verzahnung 352 erfolgt. Dadurch entstehen Scherkräfte, die, durch die in tangentialer Richtung drehsteife Verbindung der Zahnstifte 332 und des ersten Hohlrades 336, von den Zahnstiften 332 auf das Hohlrad 336 übertragen werden. Die erste Profilscheibe 334 und das erste Hohlrad 336 stellen somit in Verbindung mit den Zahnstiften 332 die erste Getriebestufe 330 des Getriebes 305 dar.

Um eine größere Übersetzung des Getriebes 305 zu erreichen, ist eine zweite Getriebestufe 340 vorgesehen. Die zweite Getriebestufe 340 umfasst eine zweite Profilscheibe 344, die von dem ersten Hohlrad 336 angetrieben wird. Analog zur ersten Getriebestufe 330 überträgt die zweite Profilscheibe 344 die rotatorische Bewegung in eine translatorische Bewegung der Zahnstifte 342, welche durch eine zweite Verzahnung 354 im feststehenden Hohlrad 350 und einer in tangentialer Richtung drehsteife Verbindung der Zahnstifte 342 mit einem zweiten Hohlrad 346 eine Übersetzung realisieren. Das zweite Hohlrad 346 ist drehsteif mit einem Ritzel 360 verbunden, sodass eine hohe Übersetzung von dem Motor 310 bis zum Ritzel 360 erreicht werden kann.

Vorliegend ist darüber hinaus eine Bremse 320 vorgesehen, welche mit einer Bremsscheibe 322 eine Beschleunigung realisieren kann. Die Bremsscheibe 322 ist in einem Bereich angeordnet, der zwischen dem Motor 310 und der ersten Profilscheibe 334 angeordnet ist. Die Bremsscheibe 322 ist an der hier angeordneten Welle drehsteif angeordnet. Die Bremse 320 ist vorzugsweise an dem feststehenden Hohlrad 350 angeordnet, sodass die Bremse 320 an der Bremsscheibe 322 angreifen kann und diese somit beschleunigen kann. Insbesondere ist hier eine negative Beschleunigung vorgesehen, sodass eine Drehgeschwindigkeit der Bremsscheibe 322 durch die Bremse 320 verzögert wird.

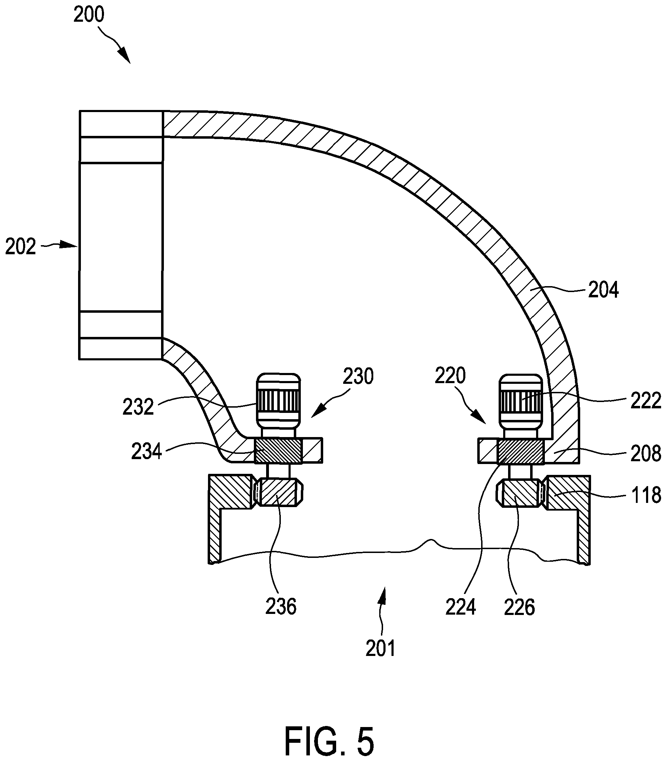

Figur 5 zeigt eine schematische zweidimensionale Schnittdarstellung einer beispielhaften Ausführungsform eines Maschinenträgers mit daran angeordneten planetengetriebefreien Azimutantrieben. Der Maschinenträger 200 weist eine röhrenförmige Geometrie auf, die durch eine Wandung 204 umschlossen wird. Der Maschinenträger 200 weist zwei große Eingangsöffnungen auf, wobei die erste Eingangsöffnung 201 im Betrieb an einem Turmflansch und die zweite Eingangsöffnung 202 zur Aufnahme einer Rotationsbaugruppe angeordnet und ausgebildet ist. Eine erste Durchtrittsrichtung der ersten Eingangsöffnung am Turmflansch weist im Betrieb eine vertikale Ausrichtung auf, die im Betrieb im Wesentlichen parallel zur Längsachse eines Turmes ausgerichtet ist. Die zweite Eingangsöffnung 202 des Maschinenträgers 200 weist eine zweite Durchtrittsrichtung auf, die orthogonal zu der ersten Durchtrittsrichtung ausgerichtet ist.

Am Maschinenträger gemäß Figur 5 sind planetengetriebefreie elektrische Azimutantriebe 220, 230 angeordnet. Der erste Azimutantrieb 220 und der zweite Azimutantrieb 230 sind im Bereich der ersten Eingangsöffnung an einem nach innen ragenden Maschinenträgerflansch 208 angeordnet. Das feststehende Hohlrad, welches in Figur 4 mit dem Bezugszeichen 350 versehen ist, ist hier innerhalb einer Öffnung des Maschinenträgerflansches 208 drehsteif angeordnet. Die Drehachse der Azimutantriebe 220, 230 ist parallel zur Turmachse beziehungsweise zur Eintrittsrichtung der ersten Eingangsöffnung des Maschinenträgers, welche dem Turm zugewandt ist, ausgerichtet. Der Turm der Windenergieanlage weist an dem Turmkopfende, welches dem Maschinenträger zugewandt ist, einen radialinnenverzahnten Turmflansch 118 auf. Die Azimutantriebe 220, 230 und der radialinnenverzahnte Turmflansch 118 sind derart angeordnet, dass die Ritzel 226, 236 der Azimutantriebe 220, 230 in die Verzahnung des radialinnenverzahnten Turmflansches 118 eingreifen.

Durch derart kompakte Azimutantriebe beziehungsweise Pitchantriebe kann eine besonders vorteilhafte Windenergieanlage bereitgestellt werden. Einerseits können die Azimutantriebe in einem kompakten Maschinenträger, wie es beispielsweise in Figur 5 gezeigt ist, eingebaut werden, sodass die Azimutantriebe kein eigenes Gehäuse mehr benötigen und/oder Platz für andere Komponenten in dem den Maschinenträger umgebenden Bereich frei wird. Ferner wird dadurch das Gewicht der Gondel beziehungsweise des Maschinenhauses reduziert. Darüber hinaus kann die Azimuteinheit einer Windenergieanlage durch eine kleinere Baugröße gemäß der Erfindung eingesetzten planetengetriebefreien Stellantriebe deutlich kompakter ausgeführt werden oder sogar ganz entfallen, wenn, wie in Figur 5 dargestellt, die Azimutantriebe direkt im Maschinenträger integriert sind. Außerdem kann gegebenenfalls auf die Azimuteinheit überwiegend verzichtet werden, da die Azimutantriebe an einem Maschinenträger angeordnet werden.

Insbesondere durch den Einsatz derartig kompakter Stellantriebe in den Pitchantrieben kann das Gewicht der rotierenden Masse im Rotor reduziert werden, sodass weitere Vorteile im Bereich der Mechanik erzielt werden könnten, wobei insbesondere Vorteile in Bezug auf dynamische Lasten erzielt werden können. Es ist ferner ein Vorteil, dass die planetengetriebefreien Stellantriebe verschleißfreier und einen höheren Wirkungsgrad aufweisen können, so dass die Wartungsintensität und Leistungsfähigkeit der Windenergieanlage gesteigert werden kann, womit unter anderem ressourcenschonender Energie erzeugt sowie ferner die Kosten der Windenergieanlage und somit auch der Energieproduktion reduziert werden können.

### BEZUGSZEICHEN

- 100: Windenergieanlage
- 102: Turm
- 104: Gondel
- 105: Maschinenhaus
- 106: Rotor
- 108: Rotorblatt
- 110: Spinner
- 112: Rotornabe
- 114: Generator
- 118: Radial, innenverzahnter Turmflansch
- 120: Pitchantrieb
- 130: Azimuteinheit
- 131: erster Azimutantrieb
- 132: zweiter Azimutantrieb
- 133: dritter Azimutantrieb
- 200: Maschinenträger
- 201: erste Eingangsöffnung
- 202: zweite Eingangsöffnung
- 204: Wandung
- 208: Maschinenträgerflansch
- 220: erster planetengetriebefreier elektrischer Stellantrieb
- 222: Motor erste Pitchverstelleinheit
- 224: Getriebe
- 226: Ritzel
- 230: zweiter planetengetriebefreier elektrischer Stellantrieb
- 232: Motor zweite Pitchverstelleinheit
- 234: Getriebe
- 236: Ritzel
- 300: planetengetriebefreier elektrischer Stellantrieb
- 305: Getriebe
- 310: Motor
- 320: Bremse
- 322: Bremsscheibe
- 330: erste Getriebestufe
- 332: Zahnstifte
- 334: erste Profilscheibe
- 336: erstes Hohlrad
- 340: zweite Getriebestufe
- 342: Zahnstifte
- 344: zweite Profilscheibe
- 346: zweites Hohlrad
- 350: feststehendes Hohlrad
- 352: erste Innenverzahnung des feststehenden Hohlrads
- 354: zweite Innenverzahnung des feststehenden Hohlrads
- 360: Abtriebsritzel
- 400, 400': Azimuteinheit
- 401,401': Azimutantrieb
- 410: Motor
- 420, 420': Bremse
- 422, 422': Bremsscheibe
- 430: erste Getriebestufe
- 440: zweite Getriebestufe
- 450: Wälzlager
- 460: Abtriebsritzel
- 470: Azimutlager
- 472: Verzahnung
- 480: Maschinenträger
- 490: Turmwandung
- 1141: Generator-Stator
- 1142: Generator-Rotor
- 4501: Verzahnung Wälzlager
- D: Drehachse

## Patentansprüche

1. Maschinenhaus (105) für eine Windenergieanlage (100), insbesondere eine Windenergieanlage mit einer Nennleistung von mehr als 3000 kW, mit
- mindestens einem zur Windrichtungsnachführung des Maschinenhauses eingesetzten Azimutantriebs (220, 230, 300, 401), der als planetengetriebefreier elektrischer Stellantrieb ausgebildet ist,
**dadurch gekennzeichnet, dass**
- der planetengetriebefreie elektrische Stellantrieb des mindestens einen Azimutantriebs (220, 230, 300, 401) ein Getriebe mit zwei Getriebestufen (430, 440) umfasst, und
- das Getriebe als Zahnstiftgetriebe (305) ausgebildet ist mit einer Mehrzahl von bewegbaren Zahnstiften (332, 342) und mit einem Antriebselement, welches als Profilscheibe (334, 344) mit ein, zwei oder mehreren Erhebungen ausgebildet ist, und
- das Getriebe eine Antriebswelle und eine Abtriebswelle aufweist, wobei eine Kraftübertragung von der Antriebswelle zur Abtriebswelle mittels der translatorisch bewegten Zahnstifte (332, 342) erfolgt, deren Translationsrichtung radial zur Antriebswelle und/oder Abtriebswelle ausgerichtet ist.

2. Maschinenhaus (105) nach dem vorhergehenden Anspruch, wobei der mindestens eine Azimutantrieb (220, 230, 300, 401) an einem Maschinenträger (200, 480) des Maschinenhauses angeordnet ist.

3. Maschinenhaus (105) nach mindestens einem der vorhergehenden Ansprüche, **dadurch gekennzeichnet, dass** der mindestens eine Azimutantrieb (220, 230, 300, 401) teilweise oder vollständig innerhalb eines Hohlraumes des Maschinenträgers (200, 480) des Maschinenhauses angeordnet ist.

4. Maschinenhaus (105) nach mindestens einem der vorhergehenden Ansprüche, **dadurch gekennzeichnet, dass** der Hohlraum des Maschinenträgers (200, 480) als Gehäuse für den mindestens einen Azimutantrieb (220, 230, 300, 401) ausgebildet ist.

5. Maschinenhaus (105) nach mindestens einem der vorhergehenden Ansprüche, **dadurch gekennzeichnet, dass** das Getriebe (305) je Getriebestufe (430, 440) eine Übersetzung von 10 bis 100 aufweist.

6. Maschinenhaus (105) nach mindestens einem der vorhergehenden Ansprüche, **dadurch gekennzeichnet, dass** der planetengetriebefreie elektrische Stellantrieb eine Bremse (320, 420) umfasst, welche vorzugsweise an einem feststehenden Hohlrad (350) des Getriebes (305) angeordnet ist und/oder ausgebildet ist, eine Welle des Getriebes zu beschleunigen.

7. Windenergieanlage (100), insbesondere Windenergieanlage mit einer Nennleistung von mehr als 3000 kW, mit einem Turm (102) und einem an einem oberen Ende des Turms angeordneten Maschinenhaus (105) und einem Rotor (106), wobei das Maschinenhaus ein Maschinenhaus nach mindestens einem der Ansprüche 1-6 ist.

8. Verwendung eines planetengetriebefreien elektrischen Stellantriebs als Azimutantrieb (220, 230, 300, 401) zur Windrichtungsnachführung eines Maschinenhauses (105) einer Windenergieanlage, insbesondere einer Windenergieanlage mit einer Nennleistung von mehr als 3000 kW,
**dadurch gekennzeichnet, dass**
- der planetengetriebefreie elektrische Stellantrieb ein Getriebe mit zwei Getriebestufen (430, 440) umfasst, und
- das Getriebe als Zahnstiftgetriebe (305) ausgebildet ist mit einer Mehrzahl von bewegbaren Zahnstiften (332, 342) und mit einem Antriebselement, welches als Profilscheibe (334, 344) mit ein, zwei oder mehreren Erhebungen ausgebildet ist, und
- das Getriebe eine Antriebswelle und eine Abtriebswelle aufweist, wobei eine Kraftübertragung von der Antriebswelle zur Abtriebswelle mittels der translatorisch bewegten Zahnstifte (332, 342) erfolgt, deren Translationsrichtung radial zur Antriebswelle und/oder Abtriebswelle ausgerichtet ist.

9. Verfahren zur Windrichtungsnachführung eines Maschinenhauses (105) einer Windenergieanlage (100), insbesondere einer Windenergieanlage mit einer Nennleistung von mehr als 3000 kW, umfassend
- Bereitstellen eines Maschinenhauses nach mindestens einem der Ansprüche 1-6;
- Ansteuerung des mindestens einen planetengetriebefreien elektrischen Stellantriebs;
- Antreiben eines Ritzels (226, 236, 360, 460) und Drehen des Maschinenhauses um eine Rotationsachse des Maschinenhauses.

## Claims

1. A nacelle (105) for a wind power installation (100), in particular a wind power installation having a nominal output of more than 3000 kW, having
- at least one azimuth drive (220, 230, 300, 401) which is used for the wind-direction tracking of the nacelle and which is configured as a planetary-gearbox-free electric actuator drive,
**characterized in that**
- the planetary-gearbox-free electric actuator drive of the at least one azimuth drive (220, 230, 300, 401) comprises a gearbox having two gearbox stages (430, 440), and
- the gearbox is configured as a toothed-pin gearbox (305), having a plurality of movable toothed pins (332, 342) and having a drive element which is configured as a profiled disk (334, 344) having one, two, or a plurality of elevations, and
- the gearbox has an input shaft and an output shaft, wherein a force transmission from the input shaft to the output shaft is performed by means of toothed pins (332, 342) that are moved in a translatory manner, the translatory direction of said toothed pins (332, 342) being aligned so as to be radial to the input shaft and/or the output shaft.

2. The nacelle (105) as claimed in the preceding claim, wherein the at least one azimuth drive (220, 230, 300, 401) is disposed on a machine support (200, 480) of the nacelle.

3. The nacelle (105) as claimed in at least one of the preceding claims, **characterized in that** the at least one azimuth drive (220, 230, 300, 401) is partially or completely disposed within a cavity of the machine support (200, 480) of the nacelle.

4. The nacelle (105) as claimed in at least one of the preceding claims, **characterized in that** the cavity of the machine support (200, 480) is configured as a housing for the at least one azimuth drive (220, 230, 300, 401).

5. The nacelle (105) as claimed in at least one of the preceding claims, **characterized in that** the gearbox (305) per gearbox stage (430, 440) has a gearing from 10 to 100.

6. The nacelle (105) as claimed in at least one of the preceding claims, **characterized in that** the planetary-gearbox-free electric actuator drive comprises a brake (320, 420) which is preferably disposed on a stationary ring gear (350) of the gearbox (305) and/or is configured for accelerating a shaft of the gearbox.

7. A wind power installation (100), in particular a wind power installation having a nominal output of more than 3000 kW, having a tower (102), and a nacelle (105) that is disposed on an upper end of the tower, and a rotor (106), wherein the nacelle is a nacelle as claimed in at least one of claims 1 to 6.

8. The use of a planetary-gearbox-free electric actuator drive as an azimuth drive (220, 230, 300, 401) for the wind-direction tracking of a nacelle (105) of a wind power installation, in particular a wind power installation having a nominal output of more than 3000 kW,
**characterized in that**
- the planetary-gearbox-free electric actuator drive comprises a gearbox having two gearbox stages (430, 440), and
- the gearbox is configured as a toothed-pin gearbox (305), having a plurality of movable toothed pins (332, 342) and having a drive element which is configured as a profiled disk (334, 344) having one, two, or a plurality of elevations, and
- the gearbox has an input shaft and an output shaft, wherein a force transmission from the input shaft to the output shaft is performed by means of toothed pins (332, 342) that are moved in a translatory manner, the translatory direction of said toothed pins (332, 342) being aligned so as to be radial to the input shaft and/or the output shaft.

9. A method for the wind-direction tracking of a nacelle (105) of a wind power installation (100), in particular a wind power installation having a nominal output of more than 3000 kW, comprising the following method steps:
- providing a nacelle as claimed in at least one of claims 1 to 6;
- actuating the at least one planetary-gearbox-free electric actuator drive;
- driving a sprocket (226, 236, 360, 460) and rotating the nacelle about a rotation axis of the nacelle.

## Revendications

1. Bâti de machine (105) pour une éolienne (100), en particulier une éolienne avec une puissance nominale supérieure à 3000 kW, avec
- au moins un entraînement azimutal (220, 230, 300, 401) employé pour suivre le sens du vent du bâti de machine, qui est réalisé en tant qu'un entraînement de réglage électrique sans engrenage planétaire,
**caractérisé en ce que**
- l'entraînement de réglage électrique sans engrenage planétaire de l'au moins un entraînement azimutal (220, 230, 300, 401) comprend une transmission avec deux étages de transmission (430, 440), et
- la transmission est réalisée en tant qu'une transmission à tiges dentées (305) avec une multitude de tiges dentées (332, 342) mobiles et avec un élément d'entraînement, lequel est réalisé en tant que disque profilé (334, 344) avec une, deux ou plusieurs parties surélevées, et
- la transmission présente un arbre d'entraînement et un arbre de sortie, dans lequel un transfert de force depuis l'arbre d'entraînement vers l'arbre de sortie est effectué au moyen des tiges dentées (332, 342) déplacées par translation, dont la direction de translation est orientée de manière radiale par rapport à l'arbre d'entraînement et/ou l'arbre de sortie.

2. Bâti de machine (105) selon la revendication précédente, dans lequel l'au moins un entraînement azimutal (220, 230, 300, 401) est disposé sur un support de machine (200, 480) du bâti de machine.

3. Bâti de machine (105) selon au moins l'une quelconque des revendications précédentes, **caractérisé en ce que** l'au moins un entraînement azimutal (220, 230, 300, 401) est disposé en partie ou en totalité à l'intérieur d'un espace creux du support de machine (200, 480) du bâti de machine.

4. Bâti de machine (105) selon au moins l'une quelconque des revendications précédentes, **caractérisé en ce que** l'espace creux du support de machine (200, 480) est réalisé en tant que boîtier pour l'au moins un entraînement azimutal (220, 230, 300, 401).

5. Bâti de machine (105) selon au moins l'une quelconque des revendications précédentes, **caractérisé en ce que** la transmission (305) par étage de transmission (430, 440) présente une démultiplication de 10 à 100.

6. Bâti de machine (105) selon au moins l'une quelconque des revendications précédentes, **caractérisé en ce que** l'entraînement de réglage électrique sans engrenage planétaire comprend un frein (320, 420), lequel est disposé de préférence sur une couronne (350) immobile de la transmission (305) et/ou est réalisé pour accélérer un arbre de la transmission.

7. Eolienne (100), en particulier éolienne avec une puissance nominale supérieure à 3000 kW, avec un mât (102) et un bâti de machine (105) disposé sur une extrémité supérieure du mât, et un rotor (106), dans laquelle le bâti de machine est un bâti de machine selon au moins l'une quelconque des revendications 1 - 6.

8. Utilisation d'un entraînement de réglage électrique sans engrenage planétaire en tant qu'entraînement azimutal (220, 230, 300, 401) pour suivre le sens du vent d'un bâti de machine (105) d'une éolienne, en particulier d'une éolienne avec une puissance nominale supérieure à 3000 kW,
**caractérisée en ce que**
- l'entraînement de réglage électrique sans engrenage planétaire comprend une transmission avec deux étages de transmission (430, 440), et
- la transmission est réalisée en tant que transmission à tiges dentées (305), avec une multitude de tiges dentées (332, 342) mobiles et avec un élément d'entraînement, lequel est réalisé en tant que disque profilé (334, 344) avec une, deux ou plusieurs parties surélevées, et
- la transmission présente un arbre d'entraînement et un arbre de sortie, dans lequel un transfert de force depuis l'arbre d'entraînement vers l'arbre de sortie est effectué au moyen des tiges dentées (332, 342) déplacées par translation, dont la direction de translation est orientée de manière radiale par rapport à l'arbre d'entraînement et/ou l'arbre de sortie.

9. Procédé pour suivre le sens du vent d'un bâti de machine (105) d'une éolienne (100), en particulier d'une éolienne avec une puissance nominale supérieure à 3000 kW, comprenant
- la fourniture d'un bâti de machine selon au moins l'une quelconque des revendications 1 - 6 ;
- le pilotage de l'au moins un entraînement de réglage électrique sans engrenage planétaire ;
- l'entraînement d'un pignon (226, 236, 360, 460) et la rotation du bâti de machine autour d'un axe de rotation du bâti de machine.
